# EUROPÄISCHE PATENTSCHRIFT

(11) **EP 1 535 101 B1**
(45) Veröffentlichungstag und Bekanntmachung des Hinweises auf die Patenterteilung: **20.10.2010**
(21) Anmeldenummer: 03793624.2
(22) Anmeldetag: 18.07.2003
(51) Int. Cl.: G02B 21/36, G03B 17/48

(54) **Kamera-Adapter für ein Mikroskop**
Camera adapter for a microscope
Adaptateur de caméra pour un microscope

(30) Priorität: 04.09.2002 DE 10240720
(43) Veröffentlichungstag der Anmeldung: 01.06.2005
(73) Patentinhaber: Carl Zeiss Meditec AG, 07745 Jena (DE)
(72) Erfinder: LUTHER, Egon, 07751 Cospeda (DE); KOSCHMIEDER, Ingo, 07743 Jena (DE); BUCHHEISTER, Jan, 07751 Jena (DE); HOFMANN, Eberhard, 07646 Bollberg (DE); GERLACH, Mario, 07768 Altenberga (DE); RÜHLING, Stephan, 07745 Jena (DE)
(86) Internationale Anmeldenummer: PCT/EP2003/007876
(87) Internationale Veröffentlichungsnummer: WO 2004/023185

(56) Entgegenhaltungen:
- DE-A- 3 804 198
- DE-A- 19 938 466
- DE-U- 20 010 421
- FR-A- 2 793 567
- US-A- 3 900 021
- US-A- 4 862 199
- US-A- 5 006 872
- US-A- 5 652 676
- US-B1- 6 327 078

## Beschreibung

Die vorliegende technische Lösung betrifft einen Kamera-Adapter durch den es möglich ist, beliebige Video- und Fotokameras an ein vorhandenes Bildauskoppelsystem z. B. den Strahlenteiler eines Mikroskops anzuschließen. Der Adapter kann auch für Stereomikroskope und insbesondere für Augenmikroskope verwendet werden.

Nach dem bekannten Stand der Technik werden zur Dokumentation von Mikroskopbildem objektivlose Kameras über eine entsprechende Kupplung an einen speziellen optischen Ausgang am Mikroskop bzw. Stereomikroskop angeschlossen. Als übliche Kupplungs-Systeme kommen dabei beispielsweise T2, C-Mount oder verschiedene Bajonettanschlüsse zur Anwendung. Die Bildinformation für diesen speziellen Kamera-Ausgang wird durch Pupillenteilung des optischen Strahlengangs bzw. eines Stereostrahlenganges erzeugt und über eine spezielle Abbildungsoptik auf das entsprechende Aufnahmemedium abgebildet. Bei der in der US 5,652,676 beschriebenen Lösung beinhaltet der Adapter ein motorisch angetriebenes Zoom-Objektiv und verfügt über einen Ring, an den Video- oder Fotokameras mit C-Mount oder Bajonettanschluss angeschlossen werden können. Da diese Kameras jedoch meist Speziallösungen ausschließlich für technische Bereiche darstellen, wurde verstärkt nach anderen Lösungen gesucht.

Eine weitere Möglichkeit der Bildgewinnung stellen Kameras dar, die am Okularstutzen oder am Okular des optischen Gerätes angebracht werden. In der EP 0 274 038 ist eine derartige Lösung beschrieben, bei der das Tubusbild einer Spaltlampe oder eines Mikroskops über einen speziellen Adapter und das Kameraobjektiv auf ein Aufnahmemedium abgebildet wird. Die US 5,053,794 beschreibt einen Adapterring, der beispielsweise zum verbinden einer Foto- oder Videokamera mit dem Okular eines Teleskops oder Mikroskops geeignet ist. Bei diesen Lösungen können zwar "normale" Spiegelreflex-Kamera zum Einsatz kommen, allerdings wirkt sich nachteilig aus, dass dadurch bei angeschlossener Kamera eine binokulare Beobachtung ausgeschlossen ist.

In der Gebrauchsmuster-Anmeldung DE 200 10 421 U1 wird ein Adapter zum Anschließen einer Kamera an den Fototubus eines Mikroskops beschrieben. Der Adapter verfügt dabei über ein Linsensystem und einen Haltebügel. Vom Linsensystem wird das im Mikroskop erzeugte Zwischenbild nach unendlich abgebildet und über das Objektiv der angeschlossenen Kamera auf dessen Aufnahmemedium projiziert. Der Haltebügel ist am Fototubus des Mikroskops befestigt und weist eine Befestigungsschraube auf, die in das an der Kamera vorhanden Stativgewinde greift und die Kamera so fixiert. Da es für den Abstand des Stativgewindes von der optischen Achse bzw. für die Anordnung des Stativgewindes am Kameragehäuse keinen einheitlichen Standard gibt, sind diese Maße bei den Kameras doch recht verschieden. Der beschriebene Adapter ist somit nur für bestimmte Kameras nutzbar und muss für andere Kameras angepasst werden.

Ein kombinierter Adapter zum Anschluss einer Video- und mindestens einer Fotokamera an ein Operationsmikroskop wird in der DE 38 04 198 A1 beschrieben. Über zwei reflektierende, optische Elemente, von denen eines schwenkbar angeordnet ist, wird der zur Bildgebung abgezweigte Abbildungsstrahlengang wahlweise für eine der Kameras zur Verfügung gestellt. Um das Ausmaß des Adapters möglichst gering zu halten erfährt das vom Objekt kommende Licht eine geradzahlige Anzahl von Reflexionen, damit sowohl von der Video- als auch von der Fotokamera seitenrichtige Bilder aufgezeichnet werden. Auf einen Bildrotator kann somit verzichtet werden.

Ein Videozusatz für ein Mikroskop ohne Fototubus wird in der US 5,568,188 beschrieben. Der Videozusatz wird dabei über Verbindungselemente mit dem Mikroskop verbunden. Die Justierung des Videozusatzes bezüglich der optischen Achse des Mikroskops erfolgt mittels vorhandener Schrauben. Die eingestellte Position des Videozusatzes wird mit Hilfe von Federn und Sicherungsschrauben fixiert. Die optische Achse des Videozusatzes schließt mit der optischen Achse des Mikroskops einen Winkel ein, so dass die von beiden Elementen betrachteten Bilder nicht gleich sind. Es ist somit nicht möglich das im Mikroskop betrachtete Bild gleichzeitig von der Videokamera aufnehmen zu lassen. Für die Videodokumentation sind die Einstellungen am Mikroskop zu verändern. Dadurch ist nur schwer sicher zu stellen, dass die Videoaufzeichnung mit den zuvor vom Beobachter gesehenen Bildern des zu untersuchenden Auges identisch sind. Außerdem bewirkt diese "doppelte" Untersuchung einen wesentlich höheren zeitlichen Aufwand und damit eine größere Belastung des Patienten.

Die US 5,134,515 betrifft einen Fotozusatz und eine Blendenanordnung für ein binokulares Mikroskop, insbesondere ein Augenmikroskop. Der Fotozusatz ist dabei im Beobachtungsstrahlengang zwischen dem Vergrößerungswechsler und dem Okulartubus angeordnet. In diesem Fotozusatz befindet sich ein beweglicher Spiegel, der bei Betätigung in den Beobachtungsstrahlengang einschwenkt und diesen in Richtung des vorhandenen Fototubus und der daran angeschlossenen Fotokamera umlenkt. Gleichzeitig wird bei der Betätigung die Blendeneinstellung für die fotografische Aufnahme geändert. Mit einer geringen Zeitverzögerung wird der Auslöser der Kamera und die vorhandene Blitzleuchte betätigt und eine Aufnahme des Auges gemacht. Danach gehen alle bewegten Teile entweder durch Federkraft oder durch Schwerkraft in ihre ursprüngliche Position zurück. Somit ist der Beobachtungsstrahlengang wieder frei gegeben und die Beobachtung durch die Okulare kann fortgesetzt werden. Durch den Anbau unterschiedlicher Objektivtuben sind sowohl Kleinbild- als auch Sofortbildkameras einsetzbar. Für die Aufzeichnung von Videosequenzen ist der Fotozusatz allerdings nicht geeignet. Außerdem wirkt sich nachteilig aus, dass während der Zeit, in der Fotoaufnahmen gemacht werden, keine Beobachtung möglich ist.

Der vorliegenden technischen Lösung liegt die Aufgabe zugrunde einen Adapter für den Anschluss einer vorzugsweise digitalen Kamera an ein Mikroskop, insbesondere ein Augenmikroskop zu entwickeln. Der Adapter soll für unterschiedliche Kameras gleichermaßen geeignet sein und einen einfachen Wechsel der Kamera ermöglichen. Die Kamera soll dabei so angeordnet werden können, dass der Betrachter das Objekt sowohl über die Mikroskopokulare als auch den, an der Rückwand des Kameragehäuses befindliche, Monitor betrachten kann, ohne dabei seine Sitzposition wesentlich verändern zu müssen.

Diese Aufgabe wird dabei durch die Merkmale des unabhängigen Anspruchs gelöst. Bevorzugte Weiterbildungen und Ausgestaltungen sind Gegenstand der abhängigen Ansprüche.

Die technische Lösung wird nachfolgend anhand eines Ausführungsbeispieles beschrieben. Dazu zeigen:
- **Figur 1:**: den Prinzipaufbau des erfindungsgemäßen Kamera-Adapters,
- **Figur 2:**: den Kamera-Adapter mit einer Schnittansicht A-A und
- **Figur 3:**: die Verwendung des Kamera-Adapters an einem Mikroskop.

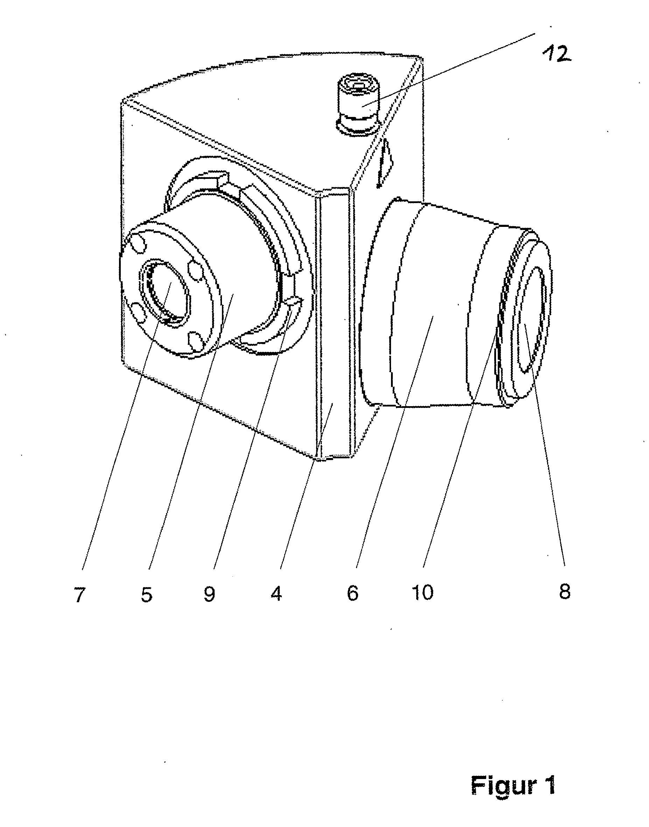

**Figur 1** zeigt den Kamera-Adapter für ein Mikroskop, insbesondere ein Augenmikroskop **1.** Zur fotografischen Dokumentation der Abbilder sind an derartigen Geräten ein zusätzliches Bildauskoppelelement **2,** wie Klappspiegel oder Strahlenteiler und eine Umfeldleuchte **3** zur Objektfeldbeleuchtung bei Spaltprojektoren erforderlich. Der zwischen dem Bildauskoppelelement **2** und der Kamera anzuordnende Kamera-Adapter besteht aus einem Gehäuse **4** mit zwei Anschlussstutzen **5** und **6.** Der mikroskopseitige Anschlussstutzen **5** weist vorzugsweise eine Schnellwechseleinrichtung **9** wie von anderen Mikroskopzubehöreinheiten bekannt auf und verfügt über eine Tubusoptik **7.** Durch diese Schnellwechseleinrichtung **9** wird der Kamera-Adapter zwangszentriert, so dass die optische Achse der Kamera mit der des Mikroskops 1 bzw. einem optischen Kanal eines Stereomikroskops zusammenfällt.

Im Gegensatz dazu hat der kameraseitige Anschlussstutzen **6** ein Filtergewinde **10** und verfügt über eine Okularoptik **8.** Das Filtergewinde **10** ist vorzugsweise M37 und kann durch die Verwendung von Zwischenringen **11** an verschiedene Durchmesser von Filtergewinden **10** bzw. Objektivzylindem angepasst werden. Zum Einsatz sollen handelsübliche Digitalkameras mit Objektiv, Filtergewinde und vorzugsweise auch einem Monitor an der Gehäuserückseite kommen. Der kameraseitige Anschlussstutzen **6** ist im Gehäuse **4** drehbar, so das die am Filtergewinde **10** mitunter schief sitzende Kamera zusammen mit dem Anschlussstutzen **6** in eine gerade Lage gebracht werden kann. Mit Hilfe einer Feststellvorrichtung **12** wird ein erneutes verdrehen des Anschlussstutzens **6** verhindert. Der Kamera-Adapter ist über eine kombinierte Prismen-Spiegelanordnung vorteilhafterweise so ausgebildet, dass eine ergonomisch günstige Betrachtung des an der Rückwand der Kamera befindlichen Monitors und eine gewohnte Bedienung möglich ist.

Die für die fotografische Dokumentation gegebenenfalls erforderliche Umfeldleuchte **3** besteht aus einer Leuchtdiode, die im speziellen Fall Weiß-Licht aussendet. Ihre Helligkeit kann über einen Dimmer **13** reguliert und den unterschiedlichen Beleuchtungsverhältnissen angepasst werden, so dass eine optimale Darstellung des Spaltbildes auf einem günstig ausgeleuchteten Umfeld (Auge) gewährleistet wird. Die Stromversorgung erfolgt über das Netzteil des Mikroskops **1.** Die Umfeldleuchte **3** kann über einen Aufsteckzapfen verfügen, der in eine am Mikroskop **1** vorhandene Öffnung passt. Die Umfeldleuchte **3** wird dann zugeschaltet, wenn in abgedunkelten Räumen Spaltaufnahmen gemacht werden und der Ort des Spaltbildes auf dem Auge dargestellt werden soll.

In einer besonderen Ausführung basiert die LED beispielsweise auf einer leistungsstarken blauen LED mit einer Wellenlänge von 450nm, die eine spezielle Schicht bei ca. 550 nm zum Leuchten anregt. Die Leuchtmaxima ergeben dabei ein bläulich weißes, sehr intensives Licht. Dadurch kann die Lichtquelle auch als Anregungslicht für Fluoreszenzuntersuchungen, d. h. für die Diagnose mit Kontrast- bzw. Fluoreszenzmitteln genutzt werden.

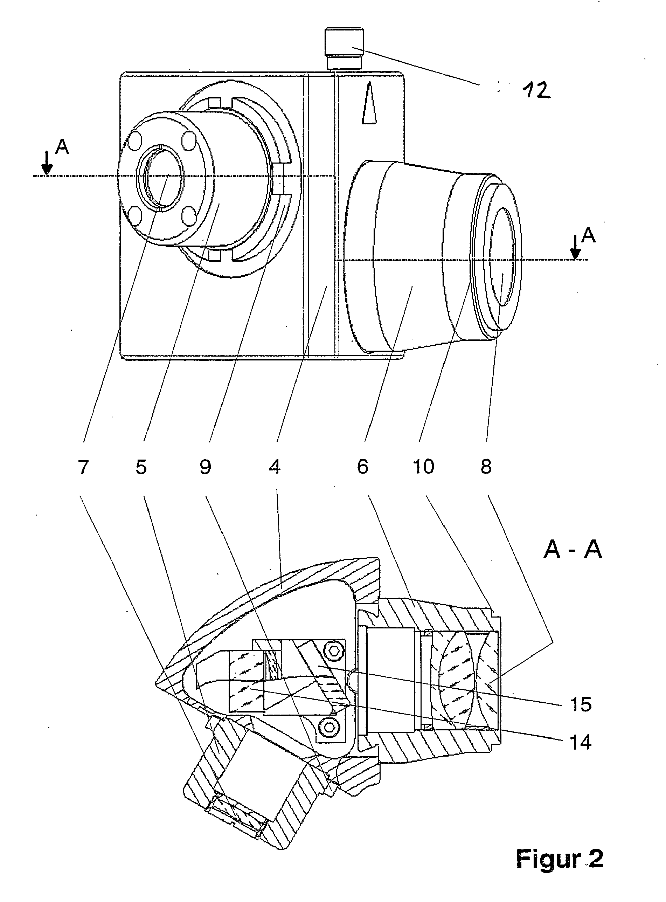

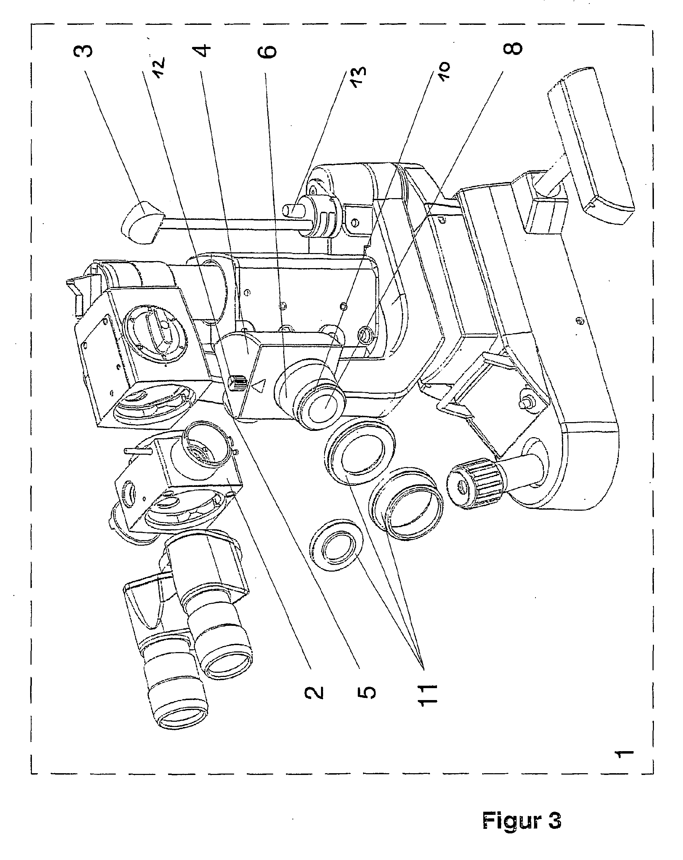

Im Gehäuse **4** des Kamera-Adapters sind ein 90°-Prisma **14** und ein Spiegel **15** als zusätzliche strahllenkende Elemente so angeordnet, dass die optischen Achsen der Anschlussstutzen **5** und **6** einen Winkel größer 90°, aber kleiner 180° einschließen. Dazu zeigt **Figur 2** den Kamera-Adapter in einer Schnittdarstellung. Beispielsweise wird ein Winkel von 120° eingeschlossen, um die Kamera in eine für den Beobachter günstige ergonomische Position zu bringen. Die zusätzlich strahllenkenden Elemente haben außerdem unterschiedliche Höhen der Anschlussstutzen **5** und **6** zur Folge, wodurch die günstige ergonomische Anordnung noch verbessert wird. Außerdem wird durch die geradzahlige Spiegelung ein seitenrichtiges aufrechtes Bild für die anzuschließende Kamera erzeugt. Die Verwendung des Kamera-Adapters an einem Augenmikroskop wird in **Figur 3** dargestellt.

Mit der technischen Lösung wurde ein Kamera-Adapter zum Anschluss digitaler Kameras, vorzugsweise mit einem Monitor an der Rückwand des Gehäuses, an ein Mikroskop und insbesondere ein Augenmikroskop geschaffen. Der Kamera-Adapter ist durch die Verwendung von Zwischenringen für unterschiedliche Kameras, die über ein Filtergewinde verfügen, geeignet und ermöglicht einen einfachen Wechsel der Kamera. Die Kamera kann dabei stets so positioniert werden, dass der Betrachter das Objekt sowohl über die Okulare als auch über den Kameramonitor betrachten kann, ohne dabei seine Sitzposition wesentlich verändern zu müssen.

Die Verwendung einer Umfeldleuchte mit einer regelbaren LED hat ein konstantes Spektrum bei allen Helligkeitseinstellungen, bietet für schwierige Beleuchtungsverhältnisse genügend Leistungsreserven und erzeugt einen sehr kleinen Korneareflex. Die höhere, konstant bleibende Farbtemperatur beispielsweise einer Weißlicht-LED führt in Ergänzung mit der Spaltbeleuchtung zu kontrastreicheren Spaltaufnahmen. Die Umfeldleuchte weist einen sehr einfachen Aufbau, bei einer hohen Lebensdauer und Zuverlässigkeit auf und kann problemlos an die Stromversorgung des Mikroskops angeschlossen werden.

### Bezugszeichenliste

- 1: Mikroskop
- 2: Bildauskoppelelement
- 3: Umfeldleuchte
- 4: Gehäuse
- 5: Anschlussstutzen, mikroskopseitig
- 6: Anschlussstutzen, kameraseitig
- 7: Tubusoptik
- 8: Okularoptik
- 9: Schnellwechseleinrichtung
- 10: Filtergewinde
- 11: Zwischenringe
- 12: Feststellvorrichtung
- 13: Dimmer
- 14: Prisma
- 15: Spiegel

## Patentansprüche

1. Kamera-Adapter für ein Mikroskop (1), welches zur fotografischen Dokumentation der Abbilder über ein zusätzliches Bildauskoppelelement (2) verfügt, bei dem der zwischen Bildauskoppelelement (2) und Kamera anzuordnende Kamera-Adapter aus einem Gehäuse (4) mit zwei Anschlussstutzen (5, 6) besteht und dessen kameraseitiger Anschlussstutzen (6) ein Filtergewinde (10) aufweist, **dadurch gekennzeichnet, dass** der mikroskopseitige Anschlussstutzen (5) über eine Tubusoptik (7) und eine Schnellwechseleinrichtung (9) und der kameraseitige Anschlussstutzen (6) über eine Okularoptik (8) verfügen und die optischen Achsen der Anschlussstutzen (5, 6) einen Winkel größer 90°, aber kleiner 180° einschließen, wobei zwischen der Tubusoptik (7) des mikroskopseitigen Anschlussstutzens (5) und der Okularoptik (8) des kameraseitigen Anschlussstutzens (6) ein Prisma (14) und ein Spiegel (15) als zusätzlich strahllenkende Elemente derart angeordnet sind, dass durch eine geradzahlige Spiegelung ein seitenrichtiges aufrechtes Bild für die Kamera erzeugt wird und der Betrachter das Objekt sowohl über die Mikroskopokulare als auch über den Kameramonitor betrachten kann, ohne dabei seine Sitzposition wesentlich verändern zu müssen.

2. Kamera-Adapter nach Anspruch 1, **dadurch gekennzeichnet, dass** der kameraseitige Anschlussstutzen (6) drehbar ist und über eine Feststellvorrichtung (11) verfügt, dass dessen Filtergewinde (10) vorzugsweise ein Gewinde M37 ist und dass dieses Filtergewinde (10) durch Zwischenringe (12) an unterschiedliche Gewindedurchmesser angepasst werden kann.

## Claims

1. Camera adapter for a microscope (1) which, for the purpose of photographic documentation of the images, has an additional image-decoupling element (2) in the case of which the camera adapter to be arranged between the image-decoupling element (2) and camera comprises a housing (4) with two connecting pieces (5, 6) and whose connecting pieces (6) on the camera side have a filter thread (10), **characterized in that** the connecting pieces (5) on the microscope side have a tube optics (7) and a quick-release device (9), and the connecting pieces (6) on the camera side have an eyepiece optics (8), and the optical axes of the connecting pieces (5, 6) close at an angle of greater than 90°, but less than 180°, a prism (14) and a mirror (15) being arranged as additionally beam-stealing elements between the tube optics (7) of the connecting pieces (5) on the microscope side and the eyepiece optics (8) of the connecting pieces (6) on the camera side in such a way that an even-numbered reflection produces a laterally correct erect image for the camera, and the viewer can view the object both via the microscope eyepiece and via the camera monitor without having to change his seating position substantially in the process.

2. Camera adapter according to Claim 1, **characterized in that** the connecting piece (6) on the camera side is rotatable and has a locking device (11), **in that** the filter thread (10) thereof is preferably a M37 thread, and **in that** this filter thread (10) can be adapted to different thread diameters by intermediate rings (12).

## Revendications

1. Adaptateur de caméra pour un microscope (1) disposant d'un élément complémentaire de couplage de l'image vers l'extérieur (2) pour la documentation photographique des images, dans lequel l'adaptateur de caméra à disposer entre l'élément de couplage de l'image vers l'extérieur (2) et la caméra, est constitué d'un carter (4) avec deux manchons de raccordement (5, 6) et dont le manchon de raccordement du côté caméra (6) comporte un filetage de filtre (10), **caractérisé en ce que** le manchon de raccordement du côté microscope (5) dispose d'une optique tubulaire (7) et d'un dispositif de changement rapide (9) et le manchon de raccordement du côté caméra (6) dispose d'une optique d'oculaire (8) et les axes optiques des manchons de raccordement (5, 6) forment un angle de plus de 90° mais inférieur à 180°, un prisme (14) et un miroir (15) étant disposés comme éléments de guidage additionnels entre l'optique tubulaire (7) du manchon de raccordement du côté microscope (5) et l'optique d'oculaire (8) du manchon de raccordement du côté caméra (6), de telle sorte qu'un nombre pair de réflexions génère une image droite conforme à l'original pour la caméra et l'observateur peut observer l'objet non seulement par l'intermédiaire des oculaires du microscope mais encore par l'intermédiaire du moniteur de la caméra sans devoir modifier sensiblement sa position assise.

2. Adaptateur de caméra selon la revendication 1, **caractérisé en ce que** le manchon de raccordement du côté caméra (6) est rotatif et dispose d'un dispositif de blocage (11), **en ce que** son filetage de filtre (10) est de préférence un filetage M37 et **en ce que** ce filetage de filtre (10) est adaptable à différents diamètres de filetage au moyen de bagues intermédiaires (12).
